# EUROPÄISCHE PATENTANMELDUNG

(11) **EP 1 457 472 A1**
(43) Veröffentlichungstag der Anmeldung: **15.09.2004**
(21) Anmeldenummer: 04450058.5
(22) Anmeldetag: 11.03.2004
(51) Int. Cl.: C04B 35/571

(54) **Verbundwerkstoff und Verfahren zu dessen Herstellung**

(30) Priorität: 11.03.2003 AT 3752003
(71) Anmelder: ARC Seibersdorf research GmbH, 1010 Wien (AT)
(72) Erfinder: Liedtke, Volker, Dr., 1100 Wien (AT); Haruvy, Yair, Dr., Rehovot 76360 (IL)
(74) Vertreter: Wildhack, Helmut, Dr. Dipl.-Ing.

(57) **Zusammenfassung**

Die Erfindung betrifft ein Verfahren zur Herstellung eines keramischen Kohlenstoff/Siliciumcarbid-Verbundwerkstoffs unter Einsatz von Organo- Silanen im Rahmen eines Sol/Gelprozesses, Trocknung und Erhitzung auf hohe Temperaturen, welches dadurch gekennzeichnet ist,
dass ein Armierungsmaterial auf Basis von Kohlenstoff(-Fasern), mit einem organische Reste aufweisenden fließfähigen Sol/Gelharz, welches durch Umsetzung von mindestens einem (Alkyl- und/oder Aryl-)Alkoxysilan-Monomeren, insgesamt jeweils entsprechend der Formel

RₓSi(OR')₄₋ₓ , (I)

worin
- R und R': Alkyl mit 1 bis 5 Kohlenstoffatomen und/oder Aryl und
- x: eine Zahl von 1,0 bis 4,0
bedeuten, mit Wasser in einem Wasser/Silan-Molverhältnis von 0,3 bis 3,0 und nach Entfernen von bei der Umsetzung entstehenden flüchtigen Komponenten erhalten worden ist, getränkt wird und der so erhaltene Kompositkörper nach Trocknung durch Erhitzen auf maximal 1850°C in den keramischen C/SiC-Verbundwerkstoff übergeführt wird.

Die Erfindung betrifft weiters die Verwendung des neuen Verbundwerkstoffes.

## Beschreibung

### Grundlage der Erfindung:

Die Erfindung betrifft im Allgemeinen keramische Verbund- bzw. Komposit-Werkstoffe und im speziellen solche auf Basis von mit Fasern oder Geweben od.dgl, verstärkten derartigen Verbundwerkstoffen. Es existiert ein weites Feld von keramischen Kompositwerkstoffen, welche sich hinsichtlich der ihnen zugrunde liegenden Matrix-Zusammensetzung und der Art von deren Armierungsmaterial sowie in der Art ihrer Herstellung voneinander unterscheiden.

Typische Armierungswerkstoffe reichen von keramischen Fasern oder Whiskers bis zu Kohlenstoff-Fasern, -Filzen oder -Geweben. Typische Wege der Herstellung der Verbundwerkstoffe umfassen das Zusammenmischen von Fasern und Keramik-Pulvern, wonach ein Erhitzen der Mischung in einer Form bei hohen Temperaturen erfolgt.

Bisweilen werden auch Nanopulver von verschiedenen keramischen Materialien und/oder Armierungs-Konstituenten für die Herstellung von Nano-Kompositwerkstoffen mit jeweils gezielt angestrebten Eigenschaften eingesetzt.

Keramische Verbundwerkstoffe werden unter anderem für Hochtemperatur-Anwendungen, für welche weder organische (Verbund-)Werkstoffe noch metallische (Verbund-)Werkstoffe verwendbar sind, eingesetzt. Für derartige Anwendungen, welche gleichzeitig gute thermische Leitfähigkeit und hohe Widerstandsfähigkeit gegen die Einwirkung von Sauerstoff bei erhöhten Temperaturen erfordern, bieten sich grundsätzlich Siliciumcarbid (SiC) als diesbezüglich einzigartiger Werkstoff an und weiters mit Kohlenstoff armierte, sogenannte C/SiC-Verbundwerkstoffe auf Basis von Siliciumcarbid an, welche die nötige mechanische Festigkeit bieten, welche für einen nachhaltigen und langdauernden Einsatz notwendig ist.

### Beschreibung des relevanten Standes der Technik:

Es sind schon C/SiC-Verbundwerkstoffe auf Basis von Kohlenstoff-Kohlenstoff-Kompositwerkstoffen und Prozesse für deren Herstellung bekannt geworden. Der üblicherweise und hauptsächlich dafür eingesetzte Prozess umfasst im Wesentlichen die Herstellung eines Kohlenstoff-Kunstharz-Verbundwerkstoffes, welcher letztlich durch Pyrolyse in einen Kohlenstoff-Kohlenstoff-Werkstoff umgewandelt wird. Dieser Werkstoff wird dann in einem Bad mit geschmolzenem Silicium-Metall umgesetzt, wobei das flüssige Silicium in das poröse C/C-Kompositmaterial eindringt und Teile der Kohlenstoffmatrix in Siliciumcarbid umwandelt [4].

Dieses LSI bzw. Liquid Silicon Impregnation-Verfahren läuft etwa, wie folgt, ab:

Zunächst wir aus einem 2D- oder 3D-Faser-Vorformling ein poröser C/C- bzw. Kohlenstofffaser-verstärkter Kohlenstoff-Verbundkörper hergestellt. Hierzu wird der Vorformling mit Phenolharz infiltriert und pyrolysiert. Dieser Prozess kann zwei bis drei Mal wiederholt werden. Alternativ kann dabei auch ein CVD-Prozess unter Abscheidung von Kohlenstoff mit CH₄/H₂ als Reaktionsgas erfolgen.

Der so erhaltene C/C-Verbundwerkstoff soll einige Prozent offene Porosität aufweisen. Es wird dann schmelzflüssiges Silicium eingebracht, und es erfolgt eine chemische Umsetzung, in deren Verlauf der Kohlenstoff der Matrix ganz oder teilweise in Siliciumcarbid übergeht. Gewisse Vorteile der auf diese Weise erhaltenen Werkstoffe bestehen darin, dass sie relativ preiswert sind und im C/C-Stadium einfach bearbeitet und auf Endmaß gebracht werden können. Ihre Nachteile bestehen in unerwünschten Inhomogenitäten, insbesondere verursacht durch "Silicium-Inseln" in der Matrix, Poren und nicht umgesetzte C/C-Bereiche.

Es ist also dieser Prozess durch die Penetrationsfähigkeit des geschmolzenen Siliciums in die Poren des Verbundwerkstoffes begrenzt, was dazu führt, dass derselbe insbesondere dann nicht homogen wird, wenn ein daraus zu produzierender Gegenstand zu groß ist. Darüber hinaus führt dieser üblicherweise angewandte Prozess zu Komposit-Werkstoffen mit diskreten Anteilen bzw. Inseln von amorphem Kohlenstoff, Siliciummetall, Siliciumcarbid und nicht benetzten Kohlenstoff-Armierungsfasern, -Geweben u.dgl.

Eine alternative Möglichkeit besteht im Einsatz des sogenannten CVD- bzw. Chemical Vapor Deposition-Verfahrens, jeweils ausgehend von geeigneten Kohlenstoff- und Silicium enthaltenden Precursern [4] auf Kohlenstoff-Faser/Filz/Gewebe-Strukturen. Dieser Prozess ist unter anderem im Hinblick auf die Probengeometrie und -größe beschränkt. Dieses CVD-Verfahren läuft etwa, wie folgt, ab:

Ein 1- bis 3-dimensional faserverstärkter Kohlenstofffaser-Vorformling wird in einer CVD-Anlage mit einem Reaktionsgas, z.B. CH₃SiCl₃ und H₂, infiltriert. Bei geeigneter Prozessführung kann auf diese Weise eine dichte Infiltration des Vorformlings mit einer SiC-Matrix erzielt werden.

Ein wesentlicher Nachteil des CVD-Prozesses besteht darin, dass er langwierig ist und je nach Dicke des Werkstücks Tage, Wochen bis hin zu Monaten dauern kann und demzufolge extrem kostenintensiv ist. Ein gewisser Vorteil dieses Verfahrens besteht darin, dass das so hergestellte C/SiC sehr homogen ist und gute mechanische und thermophysikalische Eigenschaften aufweist.

Was den Stand der Technik auf diesem Gebiet der Verbundwerkstoffe betrifft, ist folgendes auszuführen:

Die GB 2,190,929 [3] lehrt die Beschichtung von Fasern mit einem Sol eines Feuerfest-Materials, die nachträgliche Verdrillung der so behandelten Fasern und deren Erhitzen, um auf bzw. in der Faser zuerst ein Sol-Gel und nachher das feuerfeste Material zu bilden. Diese Schrift bezieht sich auch unter anderem auf Kohlenstofffasern, jedoch nicht auf die Herstellung einer die Fasern umgebenden SiC-Matrix.

Dhakata et al [5] offenbart die Einbringung von SiC-Anteilen in Kohlenstoff-Kohlenstoff-Kompositmaterialien unter Einsatz von Alkylalkoxysilan-Monomeren als Precurser, und zwar mittels eines Sol/Gel-Prozesses. Sie beschreiben zwar die mechanischen Eigenschaften der auf diese Weise erhaltenen, Siliciumcarbid enthaltenden Kohlenstoff-Kohlenstoff-Komposite, jedoch beschreiben die Autoren an keiner Stelle die Herstellung der SiC-Matrix näher.

Demgemäß bestand und besteht ein dringender Bedarf nach der Entwicklung eines allgemeinen Verfahrens zu Herstellung von tatsächlich homogenen C/SiC-Verbundwerkstoffen, welches in einfacher Weise und zu wettbewerbsfähigen Kosten durchführbar ist und zu Verbundwerkstoffen führt, welche durchaus mit bisher bekannten derartigen Kompositwerkstoffen vergleichbar sind oder aber sogar bessere Eigenschaften haben.

### Beschreibung der Erfindung:

Die der vorliegenden Erfindung zugrundeliegende Technik stammt - allgemein betrachtet - aus dem an sich sehr weiten Gebiet der Sol/Gel-Prozesse und deren Anwendung, und im Speziellen aus jener Technologie, welche zu organisch modifizierten Keramikmaterialien führt. Sie beruht auf einem "schnellen" Sol/Gel-Prozess [1, 7, 8], ist jedoch nicht ausschließlich darauf begrenzt. Im Prinzip kann man mit einem Sol/Gel-Prozess, beispielsweise ausgehend von einer Mischung von Alkyl-Alkoxysilan-Monomeren, Harze mit einem "Si-O-Si-Rückgrat" auf chemischem Wege produzieren, welche organisch modifiziert sind und jeweils auf ein gegebenes Problem abstimmbare Zusammensetzung und Viskosität aufweisen.

Die folgende Formel veranschaulicht dies, wenn auch sehr vereinfacht: 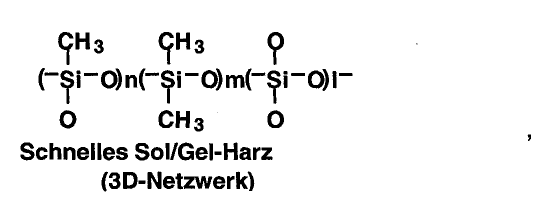 worin (n+2m)/(n+m+1) > 0.7

Dem Sol/Gel-Prozess liegt eine chemische Reaktion von (Halb-)Metallalkoxid-Monomeren, und im Speziellen z.B. von Alkoxy-Alkylsilanen, mit Wasser zugrunde, welche durch eine Säure oder Base katalysiert wird. Dieser Prozess umfasst mehrere Hydrolyseund Polymerisations-Stufen bzw. -Zustände und führt zu einer porösen, keramikartigen Matrix mit einem weiten Spektrum an Eigenschaften, je nachdem, welche Monomere eingesetzt wurden, welche Art von Sol/Gel-Prozess zur Anwendung kommt und wie die Schritte zur Verfestigung des Gels ausgesehen haben [6].

Der z.B. aus [1, 7] bekannt gewordene schnelle Sol/Gel-Prozess ("fast sol gel process") basiert auf einer raschen Hydrolyse und Polymerisation einer Mischung von (Me)ₓSi(O-Me)₄₋ₓ-Monomeren mit annähernd stöchiometrischen Mengen an Wasser. Das besondere Merkmal dieser Methode besteht darin, dass kein Lösungsmittel oder überschüssiges Wasser für die Solvatisierung zugegeben werden muss.

Typische Katalysatoren für die Reaktion sind übliche Säuren, z.B. Salzsäure, oder übliche Basen, wie z.B. Ammoniak, innerhalb eines weiten Konzentrations-Bereiches. Sie ermöglichen die Herstellung von glasartigen Materialien auf Basis eines Siloxan-Gerüstes innerhalb von Minuten, welche die Umsetzung selbst benötigt, und innerhalb weniger Stunden für das Aushärten bei Temperaturen im Bereich von 65 bis 140°C. Diese glasartigen Materialien lassen sich jeweils gezielt auf spezifische Gegenstände, Monolithe, Verbundstoffe, Überzugsschichten und mikro-optische Elemente hin veränderlich gestalten und sozusagen maßschneidern. Daraus hergestellte Überzüge haften sofort und fest an den meisten Oberflächen an und bilden mit deren Oxidgruppen chemische Bindungen [8].

Es kommt bei Einsatz der im Folgenden genannten Basis-Ausgangsmaterialien zu folgender grundsätzlicher "schneller" Sol/Gel-Harzbildung:

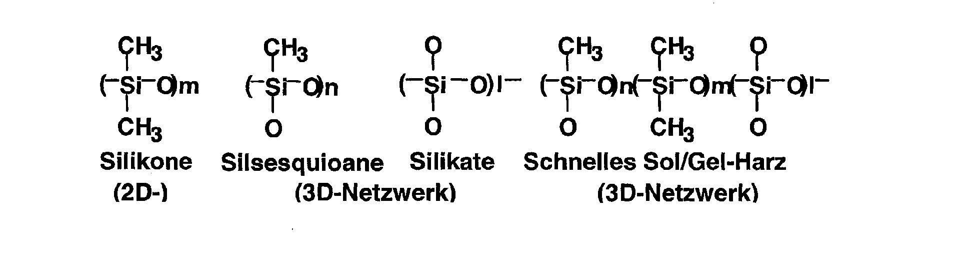

Aufgrund der chemischen Konstitution und der dreidimensionalen Struktur ist diese formelmäßig charakterisierte Familie von Umsetzungsprodukten bzw. Materialien äußerst beständig gegenüber oxidativem Abbau, und zwar bei deren Anwendung sowohl auf der Erde als auch im Weltraum [9, 10]. Im Speziellen sind Verbundstoffe unter Einsatz dieser Harze als Beschichtungsmaterial für Strukturelemente, welche bei hohen Temperaturen in hoch-oxidativer Umgebung eingesetzt werden sollen, besonders geeignet.

Es wurde unlängst gezeigt [11], dass eine Katalyse mit Flusssäure bei der schnellen Sol/Gel-Reaktion unter Anwendung von Konzentrationen zwischen 1 und 20 Mol/l zu Sol/Gel-basierten Keramiken führt, welche hohe mechanische Widerstandsfähigkeit und daher geringe Bereitschaft zu Belastungsbrüchen aufweisen. Diese Widerstandsfähigkeit ist einem teilweisen Ersatz der Si-O-Si-Brücken in der Matrix durch Si-F-Endgruppen zuzuschreiben, was zu einer erhöhten Mobilität der Gruppen und zur "Heilung" von Bindungen durch Si-F- zu Si-O-Bindungs-Austausch und zu Relaxationseffekten führt.

Die vorliegende Erfindung macht sich den soeben beschriebenen Sol/Gel-Prozess auf Basis bzw. ausgehend von Silan-Monomeren zunutze, und ihr Ziel liegt darin, einen derartigen Prozess für die Herstellung der neuen C/SiC-Verbundwerkstoffe einzusetzen und nutzbar zu machen.

Gegenstand der vorliegenden Erfindung ist somit ein neues Verfahren zur Herstellung eines keramischen Kohlenstoff-Siliciumcarbid(C/SiC)-Verbundwerkstoffs durch Einbau von SiC-Anteilen unter Einsatz von organische Gruppen aufweisenden Silanen im Rahmen eines schnellen Sol/Gel-Prozesses, nachfolgender Trocknung und schließlich Erhitzung auf hohe Temperaturen.

Das Verfahren ist dadurch gekennzeichnet, dass - für den Erhalt eines gegen oxidativen Abbau resistenten C/SiC-Keramik-Verbundwerkstoffs - ein Armierungsmaterial auf Basis von Kohlenstoff, insbesondere auf Basis von Kohlenstofffasern, mit einem durch organische Reste modifizierten flüssigen bzw. fließfähigen Sol/Gel-basierten Harz, welches durch Umsetzung eines (Alkyl- und/oder Aryl-)Alkoxysilan-Monomers oder aber einer Mischung von mindestens zwei voneinander verschiedenen (Alkyl- und/oder Aryl-)Alkoxysilan-Monomeren, stöchiometrisch insgesamt jeweils entsprechend der allgemeinen Formel

RₓSi(OR'k₄₋ₓ , (I)

worin
- R und R': unabhängig voneinander Alkyl mit 1 bis 5, vorzugsweise 1 bis 3 Kohlenstoffatomen und/oder Aryl, insbesondere Phenyl, und
- x: eine beliebige Zahl von 1,0 bis 4,0
bedeuten, mit Wasser in einem Wasser-zu-Silan-Molverhältnis von 0,3 bis 3,0, vorzugsweise von 0,6 bis 1,8, und nach teilweisem Entfernen von bei der Umsetzung entstehenden flüchtigen Komponenten erhalten worden ist, getränkt wird und der so erhaltene "grüne" Kompositkörper nach Trocknung durch Erhitzen auf Temperaturen von maximal 1850°C, vorzugsweise von maximal 1600°C, in den jeweils erwünschten keramischen C/SiC-Verbundwerkstoff übergeführt bzw. umgewandelt wird.

Bevorzugterweise werden für die Herstellung der neuen Verbundwerkstoffe Silan-Monomere bzw. Gemische derselben gemäß Anspruch 2 eingesetzt.

Der Anspruch 3 nennt im Rahmen der Erfindung wegen der problemlosen Abspaltung leichtflüchtiger Alkohole bei der Bildung des Sol/Gel-basierten Harzes besonders bevorzugte organische Gruppen in den Silan-Monomeren.

Was eine bevorzugt zum Einsatz kommende Ausführungsform des "schnellen" Sol/Gel-Prozess betrifft, so gibt darüber der Anspruch 4 näher Auskunft.

Im Rahmen einer bevorzugten Ausführungsform der Erfindung gemäß Anspruch 5 kann durch Mitverwendung von anderen Metall- bzw. Halbmetallverbindungen eine jeweils gewünschte oder gezielte Modifizierung der Eigenschaften des neuen Verbundwerkstoffes erreicht werden.

Gemäß Anspruch 6 ist es bevorzugt, dafür zu sorgen, dass das zur Tränkung vorgesehene Harz-Sol eine Viskosität aufweist, welche eine Benetzung bzw. das Eindringen desselben in die Faserarmierung jedenfalls nicht behindert.

Gemäß Anspruch 7 kann eine derartige Anpassung der Viskosität an die Erfordernisse des Vorgangs der Tränkung des Armierungsmaterials durch Einsatz bestimmter Lösungsmittel gesteuert werden.

Hinsichtlich der Methoden der Einbringung der Sol/Gel-basierten Harze in die Armierungsmaterialien ist eine der Vorgangsweisen gemäß Anspruch 8 zu bevorzugen.

Die **Ansprüche** 9, 10 und 11 geben über bevorzugt einzusetzende Armierungsmaterialien näher Auskunft.

Dem **Anspruch** 12 sind vorteilhafterweise einzuhaltende Bedingungen für die Härtung des matrixbildenden Sol/Gel-basierten Harzes zu entnehmen.

Der **Anspruch** 13 zeigt im Rahmen der Erfindung günstigerweise einzuhaltende Bedingungen für die Pyrolyse des Matrixharzes auf.

Hinsichtlich der für die Erhitzung der mit dem Harz getränkten Substrate vorgesehenen Erhitzungs-Einrichtungen gibt der **Anspruch** 14 näher Auskunft.

Dem **Anspruch** 15 ist zu entnehmen, dass die Vorgänge des Einbringens des Sol/Gel-basierten Harzes in das Substrat, der Trocknung und der Pyrolyse durchaus mehrmals wiederholt werden können, um möglichst vollständige Porenfreiheit der Matrix zu erreichen.

Gemäß **Anspruch** 16 können bei derartiger wiederholter Tränkung des Substrates auch voneinander verschiedene Sol/Gel-basierte Harze zum Einsatz kommen.

Dem **Anspruch** 17 sind bevorzugterweise nicht zu überschreitende Temperaturen für den als letzten Schritt bei der Herstellung der neuen Verbundwerkstoffe vorgesehenen Hochtemperatur-Erhitzungsprozess zu entnehmen.

Gemäß **Anspruch** 18 kann die Anwendung erhöhten Druckes bei der Hochtemperatur-Erhitzung vorgesehen sein.

Es kann bei der Hochtemperatur-Erhitzung jedoch fakultativ auch die Anwendung von Vakuum bzw. einer inerten Gas-Atmosphäre vorgesehen sein, wie dem **Anspruch** 19 zu entnehmen ist.

Die Erfindung betrifft nicht nur das neue Verfahren zur Herstellung des C/SiC-Verbundwerkstoffes, sondern auch den auf diese Weise erhaltenen Verbundwerkstoff, wie aus dem **Anspruch** 20 hervorgeht.

Einen weiteren wesentlichen Gegenstand der Erfindung stellen die auf Basis des nach dem erfindungsgemäßen Verfahren hergestellten C/SiC-Verbundwerkstoffs gefertigten Gegenstände gemäß **Anspruch** 21 dar.

Schließlich stellt die Verwendung bzw. der Einsatz der oben genannten Silane bzw. Silanmonomere der allgemeinen Formel I für die Herstellung der neuen Verbundwerkstoffe einen weiteren Gegenstand der Erfindung dar, wie sie bzw. er im **Anspruch** 22 näher spezifiziert ist.

Anhand der folgenden Beispiele wird die Erfindung näher erläutert:

### Beispiele:

### Allgemeine Beschreibung der Herstellung der Harze:

Die für die Herstellung der in den in Rede stehenden Verbundwerkstoffen als Matrix vorgesehenen Harze benötigten Chemikalien und Methoden für die Bereitung von "schnellen" Sol/Gel basierten Harzen sind als solche an verschiedenen Stellen schon beschrieben worden [1, 7, 8]. Eine typische Methode umfasst das Mischen von Methyltrimethoxisilan (MTMS) mit geringen Mengen Dimethyldimethoxisilan (DMDMS) und/oder Tetramethyl-Orthosilikat (TMOS); rasche Zugabe von wässeriger HCI (5.10⁻³ M) oder HF (1-5 M), und zwar so eingestellt, dass 0,5 Mol Wasser pro Mol Silan-Alkoxid(od.dgl.)-Gruppe zugegeben werden. Dann wird 10 min lang bei 100°C in einem verschlossenen Reaktionskolben gerührt, wonach ein allmähliches Öffnen des Kolbens während einer Zeitdauer von etwa 10 min erfolgt und das Methanol in einem Ausmaß von etwa 50 %, bezogen auf das ursprüngliche Gewicht der Ausgangsmischung, abgedampft wird, und wonach schließlich das Tränken des Substrates erfolgt. Die Aushärtung erfolgt dann innerhalb von 1 bis 2 Tagen bei 65-70°C.

Mit anderen (Halb-)Metallen modifizierte Harze können durch Zugabe eines Precursers dieser Metalle, wie z.B. Titaniumalkoxid oder Borsäure(-Anhydrid), im jeweils gewünschten Prozentsatz zu der Mischung der Silane der Formel I modifiziert werden. Die Sol/Gel-Reaktion erfolgt genauso wie soeben beschrieben, nur mit dem Unterschied, dass das molare Verhältnis des einzusetzenden Wassers gesenkt wird, um eine zu frühe Bildung eines Gels aus dem Sol zu vermeiden.

### Herstellung von C/SiC-Verbundwerkstoff-Proben:

Die neuen Verbundwerkstoffe können hergestellt werden, indem die in Gegenwart von HCI- oder HF-katalysierten "schnellen" Sol/Gel-basierten Harze auf handelsübliche 2D-oder 3D-Kohlenstofffaser-Gewebe oder auf 3D-Kohlenstofffaser-Filze, welche in 5 cm oder 6,5 cm Durchmesser aufweisenden Formen angeordnet sind, aufgebracht werden. Der Kohlenstoffgehalt der auf diese Weise gebildeten Scheiben betrug 25 bis 50 Gew.-%. Die so erhaltenen "grünen" Komposite wurden einen Tag lang bei 65°C gehärtet, wonach eine 5 h dauernde Pyrolyse unter Vakuum bei 450°C erfolgte, und zwar unter Anwendung eines Temperatur-Programms mit 1 h Anstieg, 5 h Haltezeit und 4 h Abkühlung.

Die Heißpress-Kompaktierung der Kohlenstofffaser-Sol/Gel-Verbundwerkstoffe unter Ausbildung einer glasartigen Matrix wurde in einer Anlage, wie sie in der Literaturstelle [12] beschrieben ist, durchgeführt, indem unter Vakuum langsam auf 1600°C erhitzt wurde, und dies unter allmählicher Aufbringung von Presskraft bis zu 30 MPa.

Die Herstellung der Testproben für die Durchführung der Prüfung der mechanischen Eigenschaften (Dreipunktbiege-Test) und der thermophysikalischen Eigenschaften wie spezifische Wärme sowie Wärmeleitung wurden so hergestellt, dass sie aus der wie vorher beschrieben, heißgepressten Verbundwerkstoff-Scheibe nach einem bestimmten Schema herausgeschnitten wurden, und zwar aus dem mittleren Bereich der Scheibe in Form von 6 mm breiten Streifen und aus den übrig bleibenden Randbereichen in Form von Scheibchen mit einem Durchmesser von 10 mm und einer Höhe von 1,5 mm und von derartigen Scheiben mit einem Durchmesser von 5,2 mm und einer Höhe von 1 mm.

Die mechanischen und thermischen Eigenschaften wurden nach den in der Literatur [11] beschriebenen Testverfahren gemäß den internen Normen der Anmelderin durchgeführt.

### Beispiel 1:

Es wurde eine kreisrunde Metall-Form mit einem Durchmesser von 6,5 cm und einer inneren Höhe von 0,6 cm bereitgestellt, welche mit zwei abnehmbaren Deckeln versehen war und im Inneren mit einer Polypropylenauskleidung zur Verminderung der Haftung zwischen dem Verbundwerkstoff und der Metallform ausgerüstet war.

7,2 g Kohlenstofffaser-Gewebescheiben mit 6,5 cm Durchmesser wurden als Armierungsmaterial in die Form gelegt.

40 g Methyltrimethoxysilan (MTMS, Aldrich, CP) wurden in einem Kolben mit Magnetrührstäbchen und Schraubkappe eingebracht, und es wurden 8 g Salzsäure 0,01 M zugegeben. Dabei wurden keinerlei Lösungs- oder Verdünnungsmittel eingesetzt. Der Kolben wurde nur leicht verschlossen und in ein Wasserbad mit 100°C gestellt, wobei 10 min lang gerührt wurde. Nach 10 min wurde die Verschlusskappe nach und nach geöffnet, und zwar ebenfalls wieder innerhalb von 10 min, um ein allmähliches Abdestillieren bzw. Abdampfen des bei der Hydrolyse- und Kondensations-Reaktion entstehenden Methanols zu ermöglichen. Nach dieser Zeit wurde der Kolben offen gehalten, und das Gewicht des entstandenen Harzes wurde gravimetrisch, und zwar in Minuten-Abständen, bestimmt.

Als das Gewicht des Harzes 28 g erreicht hatte, wurde es in die Metallform gegossen.

Es wurden etwa 5 g Harz in diese Form eingebracht, danach wurden die Gewebescheiben in dieselbe gelegt, dann der Rest des Harzes eingebracht, und die Gewebescheiben wurden in die Form gepresst, um ihre Benetzung mit dem Harz sicherzustellen. Die Form wurde dann geschlossen, wobei das eventuell noch freigesetzte Methanol abgesaugt wurde, und danach wurde die Form über Nacht in einen auf eine Temperatur von 70°C gehaltenen Ofen zur Aushärtung eingebracht.

Am nächsten Tag wurde die Form geöffnet, und der entstandene "grüne" Verbundkörper wurde entnommen und für die Pyrolyse in einen Vakuumofen eingebracht. Die Temperatur wurde dort innerhalb von einer Stunde auf 450°C erhöht, danach wurde fünf Stunden lang die Temperatur auf 450°C gehalten, wonach dann innerhalb eines Zeitraums von etwa 4 h abgekühlt wurde. Das auf diese Weise pyrolysierte Verbundmaterial wurde gewogen und danach in den Heißpress-Prozess eingebracht.

Dabei wurde das vorher pyrolysierte Komposit in eine Heißpresse mit Temperaturund Druckablaufprogramm eingebracht. Die Kompositprobe wurde in eine 6,5 cm Durchmesser aufweisende Press-Form eingelegt und einem langsamen, eine Stunde dauernden Temperaturanstieg auf 1600°C unter Vakuum unterworfen, während gleichzeitig der auf die Kompositprobe aufgebrachte mechanische Druck auf 30 MPa gesteigert wurde. Die Heißpresse wurde bei einer maximalen Temperatur von 1600°C unter dem angegebenen Druck zwei Stunden lang gehalten. Nachher wurde auf Umgebungstemperatur abgekühlt, wobei jedoch das Vakuum und der Maximaldruck weiter beibehalten wurden.

Die so erhaltene C/SiC-Verbundmaterialprobe wurde, wie weiter oben beschrieben, in Streifen und Scheibchen zerschnitten, und anhand dieser Testproben wurden deren typische Eigenschaften wie Biegefestigkeit, Wärmeleitfähigkeit und spezifische Wärme bestimmt.

### Ergebnis:

### Biegefestigkeit: 210 MPa, Wärmeleitfähigkeit: 11 W/mK, spezifische Wärme: 0,81 J/gK

### Beispiel 2:

### MTMS/DMDMS-basiertes Kohlenstofffaser-Gewebe-Verbundmaterial.

Es wurde wie in Beispiel 1 beschrieben, vorgegangen, jedoch wurden anstelle der dort angegebenen Mengen 36 g Methyltrimethoxysilan (MTMS, Aldrich, CP) und 6 g Dimethoxydimetylsilan (DMDMS, Aldrich, CP) in einen Kolben mit Magnetrührer und Schraubkappe eingebracht. Dann wurden 8,3 g Flusssäure 2,5 M zugegeben. Ansonsten verlief die Bereitung des Harzes und die Herstellung des Verbundwerkstoffes in der gleichen Weise wie im Beispiel 1 beschrieben.

Die typischen Eigenschaftswerte des so erhaltenen Verbundwerkstoffes waren die folgenden:
Biegefestigkeit: 175 MPa, Wärmeleitfähigkeit: 9,5 W/mK, spezifische Wärme: 0,82 J/gK

### Beispiel 3:

### TMOS/DMDMS-basierter Kohlenstofffaser-Gewebe-Verbundwerkstoff.

Es wurde wie in Beispiel 1 beschrieben vorgegangen, ausgenommen die Zusammensetzung der eingesetzten Harz-Ausgangsstoffe.

17,65 g Dimethyldimethoxisilan (DMDMS, Aldrich, CP) und 22,35 g Tetramethylorthosilikat (TMOS, Aldrich, CP), (Molverhältnis 1:1) wurden in einen Kolben mit Magnetrührstäbchen und Schraubkappe eingebracht. Dann wurden 8,3 g Flusssäure 2,5 M zugegeben. Die Herstellung des Harzes und die Herstellung des Verbundwerkstoffes unter Verwendung desselben wurden in der gleichen Weise durchgeführt wie im Beispiel 1 beschrieben.

Die an den wie weiter oben beschriebenen Testproben ermittelten Eigenschaftswerte waren die folgenden:
Biegefestigkeit: 140 MPa, Wärmeleitfähigkeit: 8,5 W/mK, spezifische Wärme: 0,83 J/gK

### Beispiel 4:

Es wurde wie in Beispiel 1 vorgegangen, abgesehen von der Zusammensetzung des Armierungsmaterials: Als solches wurden 7 g Kohlenstofffasern mit einer Durchschnittslänge von 1 cm nach dem Einbringen von 5 g Sol/Gel-basiertem Harz in die Form eingelegt. Danach wurde der Rest des Harzes eingegossen, um die Fasern vollständig zu benetzen. Ansonsten erfolgte der Verbundwerkstoff-Herstellungsprozess in gleicher Weise wie im Beispiel 1 beschrieben.

Die an den Testproben des so erhaltenen Verbundwerkstoffes erhobenen Eigenschaftswerte waren die folgenden:
Biegefestigkeit: 110 MPa, Wärmeleitfähigkeit: 14 W/mK, spezifische Wärme: 0,85 J/gK

### Liste der Publikationen, Stand der Technik:

- [1]: Y. Haruvy and S.E. Webber, FAST SOL-GEL PREPARATION OF GLASSES, *US Patent,* 5,272,240 (1993) [*Patent Appl.* **SN/07/707,140** (1991)].
- [2]: Y. Haruvy and S.E. Webber, ELECTRIC FIELD CURING OF POLYMERS, *US Patent* 5,357,015 (1994) [*Patent Appl.* **SN/08/028,786** (1993)].
- [3]: J.K. Hines, A.R. Hyde, G. Parteidge, "Mfr. of Refractory Composite Bodies by Coating Fibre with Sol, Winding Fibre and Heating to form Sol-Gel and Embedding in Refractory Matrix", Pat. GB 2190929 (1989).
- [4]: E. Fitzer, H. Muench, D. Nieder, G. Schoch, T. Stumm, "Fiber reinforced composite with prepreg development, fiber coating", final report, NTIS TIB/A91-02020.
- [5]: S.R. Dhakata, V. Raman, T.L. Dhami, O.P. Bahl, "Synthesis of Methyltriethoxysilane (MTEOS) Derived SiC Incorporated Carbon-Carbon Composites", ***J. Mater. Sci.* Lett.,** 20, 811-813 (2001).
- [6]: Sol-Gel Science: The Physics and Chemistry of Sol-Gel Processing, C. J. Brinker, G. W. Scherer (Editors), Academic Press, San-Diego, CA, USA (1990).
- [7]: Y. Haruvy, A. Heller and S.E. Webber, "Sol-Gel Preparation of Optically Clear Supported Thin-Film Glasses Embodying Laser Dyes - *Novel Fast Method",* Chap. 28 in *Proc. ACS Symp.,* **499,** "Supramolecular Architecture: Synthetic Control in Thin Films and Solids", T. Bein, Ed, ACS (1992).
- [8]: Y. Haruvy, I. Gilath, M. Maniewictz and N. Eisenberg, *Sol-Gel Replication of Micro-Optical Elements and Arrays,* ***Chem. Mater.,*** *special issue on Sol-Gel Derived Materials,* **9**, 2604 (1997).
- [9]: Y. Haruvy et al., "ATOX Protective Coating for Space-Materials by the New Fast Sol-Gel Process", Proc. 2nd Int. Conf. on "Protection of Materials and Structures from the LEO Space Environment", Toronto, Canada, Feb. 24-25 (1994).
- [10]: Y. Haruvy, "Low Flux Atomic Oxygen: Can it be More Hazardous than High Flux ? A Risk Assessment Study", Proc. 3^{rd} Int. Conf. on "Protection of Materials and Structures from the LEO Space Environment", Toronto, Canada April 25-26 (1996).
- [11]: Y. Haruvy, "Space Environment Aspects of Fast Sol-Gel-Derived Glassy Materials and Coatings", ARCS Report OFZS-W―0013 (1999).
- [12]: ARCS Hot Press Description Document

## Patentansprüche

1. Verfahren zur Herstellung eines keramischen Kohfenstoff-Siiiciumcarbid(C/SiC)-Verbundwerkstoffs durch Einbau von SiC-Anteilen unter Einsatz von organische Gruppen aufweisenden Silanen im Rahmen eines Sol/Gel-Prozesses, nachfolgender Trocknung und schließlich Erhitzung auf hohe Temperaturen,
**dadurch gekennzeichnet,**
**dass** - für den Erhalt eines gegen oxidativen Abbau resistenten C/SiC-Keramik-Verbundwerkstoffs - ein Armierungsmaterial auf Basis von Kohlenstoff, insbesondere auf Basis von Kohlenstofffasern, mit einem durch organische Reste modifizierten flüssigen bzw. fließfähigen Sol/Gel-basierten Harz, welches durch Umsetzung eines (Alkylund/oder Aryl-)Alkoxysilan-Monomers oder aber einer Mischung von mindestens zwei voneinander verschiedenen (Alkyl- und/oder Aryl-)Alkoxysilan-Monomeren, stöchiometrisch insgesamt jeweils entsprechend der allgemeinen Formel
RₓSi(OR')₄₋ₓ , (I)
worin
R und R' unabhängig voneinander Alkyl mit 1 bis 5, vorzugsweise 1 bis 3 Kohlenstoffatomen und/oder Aryl, insbesondere Phenyl, und
x eine beliebige Zahl von 1,0 bis 4,0
bedeuten, mit Wasser in einem Wasser-zu-Silan-Molverhältnis von 0,3 bis 3,0, vorzugsweise von 0,6 bis 1,8, und nach teilweisem Entfernen von bei der Umsetzung entstehenden flüchtigen Komponenten erhalten worden ist, getränkt wird und der so erhaltene "grüne" Kompositkörper nach Trocknung durch Erhitzen auf Temperaturen von maximal 1850°C, vorzugsweise von maximal 1600°C, in den jeweils erwünschten keramischen C/SiC-Verbundwerkstoff übergeführt bzw. umgewandelt wird.

2. Verfahren nach Anspruch 1, **dadurch gekennzeichnet, dass** ein (Alkyl- und/oder Aryl-)Alkoxysilan-Monomer bzw. eine Mischung von mindestens zwei (Alkyl- und/oder Aryl-)Alkoxysilan-Monomeren eingesetzt wird, in welchem bzw. in welcher die mittlere Anzahl der organischen Reste pro (Alkyl- und/oder Aryl-)Alkoxysilan-Monomer(e) zumindest 0,7 und maximal 2, vorzugsweise von 0,7 bis 1,2, beträgt.

3. Verfahren nach Anspruch 1 oder 2, **dadurch gekennzeichnet, dass** ein Silan der allgemeinen Formel I eingesetzt wird, in welchem die an das (die) Silicium- und/oder Sauerstoffatom(e) gebundenen organischen Gruppen kleine Reste, wie insbesondere Methyl-, Ethyl-, Propyl und/oder Phenyl-Reste, sind.

4. Verfahren nach einem der Ansprüche 1 bis 3, **dadurch gekennzeichnet, dass** das Sol/Gel-basierte Harz mittels eines "schnellen" Sol/Gel-Prozesses, vorzugsweise bei Temperaturen von 60 bis 140°C, insbesondere von 80 bis 120°C, gegebenenfalls bei Unterdruck, hergestellt wird.

5. Verfahren nach einem der Ansprüche 1 bis 4, **dadurch gekennzeichnet, dass** in das Sol/Gel-basierte Harz Sol/Gel-Precurser auf Basis von organischen Verbindungen mindestens eines Metalles und/oder Halbmetalles, ausgenommen Silicium, eingebaut werden, wobei an das Metallatom mindestens ein organischer Rest aus der Gruppe: Alkyl, Aryl, Alkoxy, Aryloxy, Arylalkoxy und Alkylaryloxy und/oder zumindest eine OH-Gruppe gebunden ist und die genannte Zahl der Reste bzw. Gruppen jeweils der Oxidationszahl des Metallatoms entspricht, wobei als Precurser besonders bevorzugt Borsäure bzw. Borsäure-Anhydrid und/oder Aluminiumhydroxid und/oder eine titanorganische Verbindung eingesetzt wird.

6. Verfahren nach einem der Ansprüche 1 bis 5, **dadurch gekennzeichnet, dass** die Sol/Gel- basierten Harze vor der Tränkung des Armierungsmaterials in Form einer viskosen Flüssigkeit, als viskoses Sol oder als teilweise geliertes Harz, vorzugsweise mit einer Viskosität im Bereich von 100 bis 1000 mPa·s, vorliegen.

7. Verfahren nach einem der Ansprüche 1 bis 6, **dadurch gekennzeichnet, dass** die Sol/Gel-basierten Harze nach Abdampfen einer jeweils vorgesehenen Menge des (der) bei der Reaktion der Silane mit Wasser jeweils gebildeten Alkohols (Alkohole) und/oder Phenols (Phenole) mittels zumindest eines Lösungsmittels, wie insbesondere THF, Aceton und/oder Methanol, verdünnt werden, um ihnen die für die Tränkung des Armierungsmaterials geeignete Viskosität zu verleihen.

8. Verfahren nach einem der Ansprüche 1 bis 7, **dadurch gekennzeichnet, dass** die Sol/Gel-basierten Harze in die Armierungsmaterialien durch Einbürsten, Gießen, Tauchen, Infiltration, Sprühen, Vakuum-Imprägnieren od.dgl., eingebracht werden.

9. Verfahren nach einem der Ansprüche 1 bis 8, **dadurch gekennzeichnet, dass** das Armierungsmaterial mit Kohlenstoff und/oder Grafit als Grundsubstanz gebildet ist.

10. Verfahren nach einem der Ansprüche 1 bis 9, **dadurch gekennzeichnet, dass** das Armierungsmaterial in Form von (freien) Fasern, Faserbündeln, Filzen, Geweben, Gewirken, Netzen od.dgl. und deren beliebigen Kombinationen eingesetzt wird.

11. Verfahren nach einem der Ansprüche 1 bis 10, **dadurch gekennzeichnet, dass** anstelle der im Anspruch 9 bzw. 10 genannten Armierungsmaterialien - oder zusammen mit denselben - deren organische Precurser, insbesondere in Form von organischen Fasern, wie z.B. PAN-Fasern, welche erst im Laufe des Herstellungsprozesses selbst, insbesondere im Zuge des Pyrolyse-Schrittes, in Kohlenstoff- und/oder Grafitfasern umgewandelt werden, eingesetzt werden.

12. Verfahren nach einem der Ansprüche 1 bis 11, **dadurch gekennzeichnet, dass** die Aushärtung des Sol/Gel-basierten Harzes, mit welchem das (die) Kohlenstoff(faser)-Armierungsmaterial(ien) des Verbundwerkstoffes getränkt ist (sind), gegebenenfalls bei Unterdruck, bei Umgebungstemperatur oder erhöhter Temperatur, vorzugsweise bei Temperaturen zwischen 70 und 100°C, vorgenommen wird.

13. Verfahren nach einem der Ansprüche 1 bis 12, **dadurch gekennzeichnet, dass** die Pyrolyse des Sol/Gel-basierten Harzes im Verbundwerkstoff in zumindest einem Verfahrensschritt bei Temperaturen von 400 bis 550°C vorgenommen wird.

14. Verfahren nach einem der Ansprüche 1 bis 9, **dadurch gekennzeichnet, dass** der Aushärtungs- und/oder der Pyrolyseschritt mittels direkter Beheizung, Konvektions-, Strahlungs-, Mikrowellen- oder Induktiv-Heizung vorgenommen wird.

15. Verfahren nach einem der Ansprüche 1 bis 14, **dadurch gekennzeichnet, dass** die Vorgänge des Einbringens des Sol/Gel-basierten Harzes in das Substrat, der Trocknung und der Pyrolyse mehrmals, vorzugsweise maximal drei Mal, wiederholt werden.

16. Verfahren nach Anspruch 15, **dadurch gekennzeichnet, dass**, insbesondere zur Erzielung von verbesserten mechanischen Eigenschaften des neuen Verbundwerkstoffes, bei der mehrmaligen Wiederholung der Vorgänge des Einbringens des Sol/Gel-basierten Harzes in das Substrat, der Trocknung und der Pyrolyse, gegebenenfalls jedes Mal, ein zum vorhergehenden derartigen Vorgang anderes Sol/Gel-basiertes Harz eingesetzt wird.

17. Verfahren nach einem der Ansprüche 1 bis 16, **dadurch gekennzeichnet, dass** der mit dem gemäß den Ansprüchen 12 bis 16 ausgehärteten und pyrolysierten Matrix-Material auf Basis des Sol/Gel-basierten Harzes ausgebildete Verbundwerkstoff einem Hochtemperatur-Erhitzungsprozess bei Temperaturen von maximal 1850°C, vorzugsweise von maximal 1600°C, und bei Pressdrucken im Bereich von bis zu 30 MPa unterworfen wird, wobei das Sol/Gel-basierte Harz der Matrix in ein keramisches Material umgewandelt wird, dessen Hauptkomponente Siliciumcarbid mit eventuellen geringen Anteilen an Siliciumoxicarbid ist.

18. Verfahren nach Anspruch 17, **dadurch gekennzeichnet, dass** der Hochtemperatur-Erhitzungsprozess bei erhöhtem Druck, vorzugsweise bei einem Druck von maximal 50 bar, durchgeführt wird.

19. Verfahren nach einem der Ansprüche 1 bis 18, **dadurch gekennzeichnet, dass** zumindest der Hochtemperatur-Erhitzungsprozess teilweise unter Vakuum und/oder in inerter Atmosphäre oder aber in einer teil-oxidativen oder teil-reduktiven Atmosphäre durchgeführt wird.

20. Verbundwerkstoff auf Basis eines in der SiC-Matrix vorliegenden Kohlenstoff(faser)-Armierungsmaterials, **dadurch gekennzeichnet, dass** derselbe nach einem der Verfahren gemäß zumindest einem der Ansprüche 1 bis 19 hergestellt ist.

21. Gegenstände auf Basis eines in einer SiC-Matrix vorliegenden Kohlenstoff(faser)-Armierungsmaterials, **dadurch gekennzeichnet, dass** sie aus einem Verbundwerkstoff gemäß Anspruch 20 gebildet sind.

22. Verwendung von Silanen bzw. Silanmonomeren der allgemeinen Formel I für die Herstellung von C/SiC-Verbundwerkstoffen gemäß mindestens einem der Ansprüche 1 bis 20 mit der Maßgabe, dass dieselben als Ausgangsstoffe in einem "schnellen" Sol/Gel-Prozess zur Bildung der Harzmatrix des Verbundwerkstoffes eingesetzt werden.
